(19) Europäisches Patentamt
European Patent Office
Office européen des brevets

(11) **EP 3 115 911 A1**

(12) **EUROPEAN PATENT APPLICATION**

(43) Date of publication:
**11.01.2017 Bulletin 2017/02**

(51) Int Cl.:
***G06F 17/30*** (2006.01) ***G06N 7/00*** (2006.01)

(21) Application number: **16176303.2**

(22) Date of filing: **27.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.07.2015 IN 2568MU2015**

(71) Applicant: **Tata Consultancy Services Limited Maharashtra (IN)**

(72) Inventors:
• **HASSAN, Ehtesham**
**122003 Gawal Pohari - Gurgaon (IN)**

• **YADAV, Surya**
**122003 Gurgaon - Haryana (IN)**
• **AGARWAL, Puneet**
**201309 Noida - Uttar Pradesh (IN)**
• **SHROFF, Gautam**
**122003 Gawal Pohari - Gurgaon (IN)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(54) **METHOD AND SYSTEM FOR FUSING BUSINESS DATA FOR DISTRIBUTIONAL QUERIES**

(57)     The present disclosure relates to business data processing and facilitates fusing business data spanning disparate sources for processing distributional queries for enterprise business intelligence application. Particularly, the method comprises defining a Bayesian network based on one or more attributes associated with raw data spanning a plurality of disparate sources; pre-processing the raw data based on the Bayesian network to compute conditional probabilities therein as parameters; joining the one or more attributes in the raw data using the conditional probabilities; and executing probabilistic inference from a database of the parameters by employing an SQL engine. The Bayesian Network may be validated based on estimation error computed by comparing results of processing a set of validation queries on the raw data and the Bayesian Network.

FIG.2

EP 3 115 911 A1

**Description**

Priority Claim

The present application claims priority from Indian Provisional Patent Application No. 2568/MUM/2015 filed on July 4th, 2015, the entirety of which is hereby incorporated by reference.

Technical Field

The embodiments herein generally relate to business data processing, and, more particularly, to a method and system for fusing business data for distributional queries.

Background

In the current enterprise scenario, enterprise business intelligence usually relies on data from a variety of sources being carefully connected based on common attributes and consolidated into a common data warehouse. This process is often plagued by difficulties and errors in resolving join-attributes across sources, while consolidating information into a data warehouse. Moreover, it may often be impossible to accurately join data from diverse external data sources. In spite of that, each such data source may still provide useful information on correlations amongst the attributes that it captures, and enterprises are increasingly looking for replacing the traditional data warehouse with 'data lakes' based on latest technology in order to derive statistical insights.

Traditional solution illustrated by prior art literature, in an analytics life-cycle in large enterprises operational data is extracted from transactional systems, for example point-of-sale, inventory etc., and loaded into a data warehouse, undergoing a multitude of transformations which may include de-normalization, aggregations, dropping attributes, etc. Due care is taken to ensure that related pieces of data may be joined together using common attributes, thereby enabling 'business intelligence' queries on the data warehouse, or on subsets that are called 'data marts'. Often, the analytics life-cycle ends here with operational and strategic decisions being supported by querying the past data.

However, in order to look ahead, organizations increasingly employ predictive analytics to varying degrees, using statistics means, data mining, and machine learning techniques. For such purposes, selected slices or 'data cubes' are extracted using relational queries such as SQL and loaded into statistical analysis tools such as SAS or SPSS, in order to perform regressions, time-series forecasting, or similar predictive analyses to support predictive analytics and other business intelligence applications.

While on the other dimension, in modern web based organizations, companies' data is maintained in large distributed file systems, which is typically based on 'big data' technologies, wherein concept of a carefully curated data warehouse may not be practiced. For business intelligence applications, analytical queries, irrespective of relational or statistical in nature are carried out directly on such common data store, typically in parallel using the map-reduce programming paradigm and its many extensions. Such techniques have been shown to be better suited for statistical processing and queries, which often touch large tracts of the data, as compared to the traditional index based database query systems.

Prior art literature illustrates various approaches for maintaining data in large distributed file system based on big data technologies, that have many advantages such as saving of time taken to design and implement a large enterprise data warehouse. Secondly, predictive analytics may be performed on entire data rather than only selected subsets that are limited in size by the inherent in-memory architecture of most statistical packages. Moreover, the results of such analysis are themselves stored in the same global data store, and may be used by others as inputs for further analysis. Finally, additional data elements, irrespective of being fresh data sources or merely new attributes may easily be added without having to worry about the integrity of a common data warehouse schema. Thereby, several traditional enterprises such as retail chains, banks, and manufacturers have started employing an analytics architecture similar to the one used by the web based organizations, loosely referred to as a data lake, which is opposed to the more traditional data warehouse.

In spite of solution illustrated by the prior art literature, fundamental challenges still remain, for which the data lake alone is no panacea. Considering that the disparate data sources are stored in a data lake, joining of disparate data sources remains unsolved. Further, when data volumes are very large, queries may still take inordinate amounts of time unless backed by sufficiently powerful hardware. Lastly, as number of attributes grows the well-known problems of high dimensionality appears. In particular, data cubes defined by very selective constraints on a large number attributes may be empty, i.e., there may not be any actual instances observed in the data available. Nevertheless, conclusions about such subsets are in fact possible using statistical rather than query based analysis.

Prior art literature have mostly focused on object recognition, surveillance and classification problem, however does not address distributional queries. Some of the prior art literature have applied Bayesian inferencing to answer database queries, nevertheless the problem of querying on disparate data sources has not been addressed by any such prior art literature.

Thereby, fusing business data extracted from different and diverse data sources for distributional queries is still considered as one of the biggest challenges of the technical domain.

## SUMMARY

Embodiments of the present disclosure present technological improvements as solutions to one or more of the above-mentioned technical problems recognized by the inventors in conventional systems.

In an aspect, there is provided a method comprising defining a Bayesian network based on one or more attributes associated with raw data spanning a plurality of disparate sources; pre-processing the raw data based on the Bayesian network to compute conditional probabilities therein as parameters; joining the one or more attributes in the raw data using the conditional probabilities; and executing probabilistic inference from a database of the probabilities.

In another aspect, there is provided a system comprising: one or more data storage devices operatively coupled to one or more hardware processors and configured to store instructions configured for execution by the one or more hardware processors to: define a Bayesian network based on one or more attributes associated with raw data spanning a plurality of disparate sources; pre-process the raw data based on the Bayesian network to compute conditional probabilities therein as parameters; join the one or more attributes in the raw data using the conditional probabilities; and execute probabilistic inference from a database of the probabilities.

In yet another aspect, there is provided a computer program product comprising a non-transitory computer readable medium having a computer readable program embodied therein, wherein the computer readable program, when executed on a computing device, causes the computing device to: define a Bayesian network based on one or more attributes associated with raw data spanning a plurality of disparate sources; pre-process the raw data based on the Bayesian network to compute conditional probabilities therein as parameters; join the one or more attributes in the raw data using the conditional probabilities; and execute probabilistic inference from a database of the probabilities.

In an embodiment of the present disclosure, defining the Bayesian network is based on (a) domain understanding of dependencies and correlations, (b) structure learning methods or (c) a combination thereof.

In an embodiment of the present disclosure, each of the one or more attributes form a random variable in the Bayesian network.

In an embodiment of the present disclosure, the one or more attributes that can be directly mapped to each other are assigned to a random variable and the one or more attributes that can be only be related approximately are maintained as separate random variables.

In an embodiment of the present disclosure, pre-processing the raw data comprises compressing the raw data to generate conditional probability tables.

In an embodiment of the present disclosure, executing probabilistic inference comprises employing a Structured Query Language (SQL) engine.

In an embodiment of the present disclosure, the method described herein above further comprises processing a distributional query on the Bayesian network based on the conditional probabilities to retrieve at least one result.

In an embodiment, the method described herein above further comprises validating the Bayesian network based on estimation error computed by comparing results of processing a set of validation queries on the raw data and the Bayesian network.

It is to be understood that both the foregoing general description and the following detailed description are exemplary and explanatory only and are not restrictive of the embodiments of the present disclosure, as claimed.

## BRIEF DESCRIPTION OF THE DRAWINGS

The embodiments herein will be better understood from the following detailed description with reference to the drawings, in which:

**FIG.1** illustrates an exemplary block diagram of a system for fusing business data in accordance with an embodiment of the present disclosure;
**FIG.2** illustrates an exemplary flow diagram of a method for fusing business data in accordance with an embodiment of the present disclosure;
**FIG.3** represents an exemplary Bayesian network for data pertaining to exemplary sensors (SENSOR_A, SENSOR_B, SENSOR_C, SENSOR_D) in accordance with an embodiment of the method of the present disclosure;
**FIG.4** illustrates an exemplary Bayesian network for exemplary vehicle sensor data in accordance with an embodiment of the present disclosure;
**FIG.5A, FIG.5B** and **FIG.5C** are exemplary illustrations of the distribution of discretized engine speed (ES) versus total fuel consumption (TF), control path (CP) and net torque (NT) as histograms respectively, in accordance with the present disclosure, on a visual analytics workbench;

**FIG.6** illustrates synthetic data generation and segmentation thereof into grids and sub-regions in accordance with an embodiment of the present disclosure; and

**FIG.7** illustrates an exemplary Bayesian network for connecting exemplary marketing datasets in accordance with an embodiment of the present disclosure.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

## DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

Before setting forth the detailed explanation, it is noted that all of the discussion below, regardless of the particular implementation being described, is exemplary in nature, rather than limiting.

The present disclosure provides systems and methods that facilitate distributional queries and correlating of diverse or disparate data sources based on probabilistic inference. Particularly, the present disclosure provides systems and methods for fusing multiple and seemingly disparate business data to answer distributional queries by applying Bayesian inferencing based data fusion. In accordance with the present disclosure, to efficiently execute distributional queries, relationships and correlations across data sources are summarized via a Bayesian network, which is learned in an expert-guided manner so as to incorporate domain knowledge. Yet another objective of the present disclosure is to enable inferencing on the Bayesian network using a simple SQL query based approach.

In the present disclosure, the expressions, "business data" or "raw data" or "data", may be used interchangeably throughout the specification. Likewise, the expression "Bayesian network" may be interchangeably referred to as "BN" or "network".

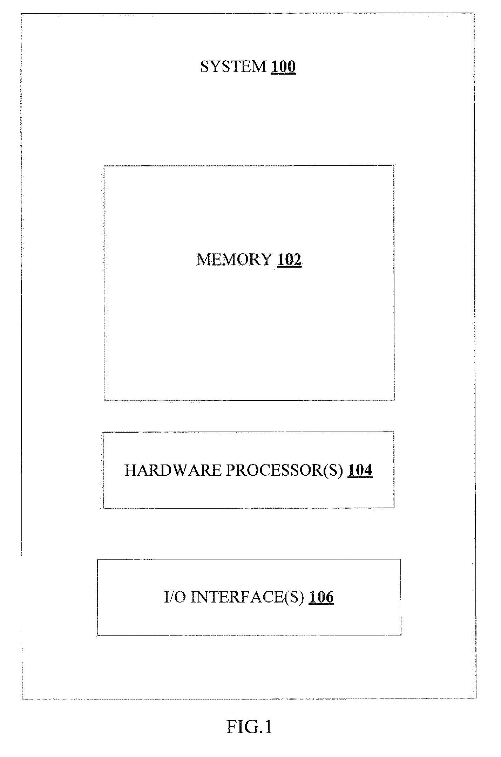

Referring now to the drawings, and more particularly to FIGS. 1 through 7, where similar reference characters denote corresponding features consistently throughout the figures, there are shown preferred embodiments and these embodiments are described in the context of the following exemplary system and method.

FIG.1 illustrates an exemplary block diagram of a system 100 for fusing business data in accordance with an embodiment of the present disclosure. In an embodiment, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, one or more modules (not shown) of the system 100 can be stored in the memory 102.

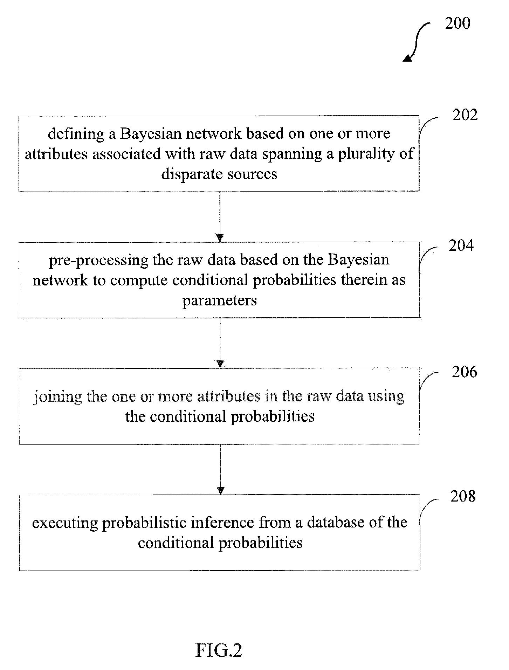

FIG.2 illustrates an exemplary flow diagram of a method 200 for fusing business data in accordance with an embodiment of the present disclosure. In an embodiment, the system 100 comprises one or more data storage devices or memory 102 operatively coupled to the one or more processors 104 and is configured to store instructions configured for execution of steps of the method 200 by the one or more processors 104.

In an embodiment of the present disclosure, a Bayesian network based on one or more attributes associated with raw data from a data-lake, spanning a plurality of disparate sources is defined at step 202. In an embodiment, each attribute forms a random variable in the Bayesian network. The Bayesian network itself can be either defined using domain-based understanding of dependencies and correlations, or using traditional structure learning approaches, or a combination thereof.

In an embodiment of the present disclosure, at step 204, the raw data is processed based on the Bayesian network to compute conditional probabilities as parameters. Queries are performed on the Bayesian network using probabilistic inference. In an embodiment, a tree structured network is used, even if it is only an approximation to the actual conditional independence relationships between attributes. In a tree-structured Bayes net, each conditional probability table (CPT) is two-dimensional, making inference efficient. In accordance with the present disclosure, the processing of raw data for computing conditional probabilities is similar to calculating materialized views in a database, albeit in a probabilistic manner.

In an embodiment of the present disclosure, attributes in disparate data sources that may be directly mapped to each other are assigned to the same network variable. For example, items or parts in different data sources that are described by an industry-standard coding scheme may be treated as a single item variable. Attributes that may only be related approximately are retained as separate network variables, with their mutual correlations being captured in the conditional probabilities of the Bayesian network. For example, different surveys might have captured data using different spatial tessellations of geographical regions, for instance, counties vs zip codes; nevertheless, mutual overlaps between such regions can be computed using maps, i.e., Geographical Information System (GIS) layers. Thus the conditional probability of a particular county lying in each possible zip code may be computed using a map. Similarly, product-related data codified using different product-category definitions may be approximately related using sample instances that are codified across multiple categorizations.

In an embodiment, a domain expert defines the BN based on domain constraints. In an embodiment, the BN structure and details are specified in a configuration file as shown herein below.

```
/home/userlDocuments/input/
lhome/user/Desktop/release/histograms/
SENSOR_A: MIN_A: MAX_A
SENSOR_A:MIN_A:MAX_A,SENSOR_B:MIN_B:MAX_B,SENSOR_C:MIN_C:M
AX_C
SENSOR_C: MIN_C:MAX_C
SENSOR_C: MIN_C: MAX_C, SENSOR_D: MIN_D: MAX_D
SENSOR_A, SENSOR_D
SENSOR_C
SENSOR B
SENSOR_B=[2,5:8]&SENSOR_C
SENSOR_C=[1,2]&SENSOR_A,SENSOR_D
SENSOR_A = [6, 7],SENSOR_D = [1,8] & SENSOR_B
```

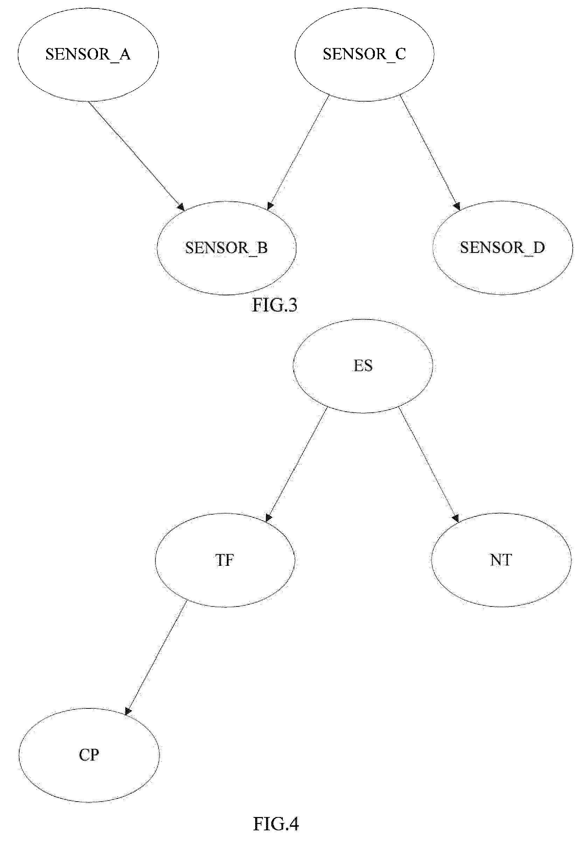

FIG.3 represents an exemplary Bayesian network for data pertaining to exemplary sensors (SENSOR_A, SENSOR_B, SENSOR_C, SENSOR_D). A template for a configuration file in accordance with the present disclosure is as shown herein below.

```
<DATA PARENT FOLDER PATH>
<OUTPUT DIRECTORYPATH>
llBAYESIAN NETWORK
<SENSOR 1>:MIN:MAX
<SENSOR 1 >: MIN: MAX, <SENSOR 2>: MIN: MAX
... ... ... ... ...
//OUTPUT DETAILS
<SENSOR X>, <SENSOR Y> //HEATMAP
<SENSOR Z> //HISTOGRAM
... ... ... ... ...
// VALIDATION QUERIES
<SENSOR L>=(Bin Values)&<SENSOR 2>
<SENSOR K> =(Bin Values), <SENSOR M>=(Bin Values)&<SENSOR 2>
```

In an embodiment, the configuration file includes details of parent sensors before that of dependent sensors.

Based on the configuration file and observed data, the conditional probability tables (CPTs) using aggregation queries similar to the one shown in Equation 1 (described herein below) are learnt. In some cases, the size of these CPTs may become exponentially large, the number of parent nodes of a node are limited to a maximum of three in the BN. Also, as far as possible, the BN is modeled as a tree rather than a Directed Acyclic Graph (DAG) to keep the size of the CPTs small. The conditional probability tables for each edge of the BN are then calculated using the original data.

In an embodiment, at step 206, the one or more attributes in the raw data are joined approximately in a principled manner using the conditional probabilities derived from appropriate sources as available, e.g., maps, sample categorizations, etc. To minimize query execution, approximate correlations are incorporated between attributes. To further minimize query execution, the method of the present disclosure may rely on an approximate network such as a tree structure. At step 208, probabilistic inference is executed from a database of the conditional probabilities. In an embodiment, the method of the present disclosure further comprises processing a distributional query on the Bayesian network based on the conditional probabilities to retrieve at least one result, which is the best probabilities answer possible based on the assumptions underlying the Bayesian network itself. In an embodiment, the method of the present disclosure further comprises validating the Bayesian network based on estimation error computed by comparing results of processing a set of distributional queries on the raw data and the Bayesian network.

In an embodiment of the present disclosure, when fast, approximate results are sufficient, as is the case in predictive analytics as opposed to regulatory reporting, present disclosure makes the enterprise data lake a viable and useful proposition as it marries approximate data mapping and probabilistic query processing in one framework based on the well-established principles of Bayesian inference.

In an exemplary embodiment of the present disclosure, described herein is scenario of a large volume of vehicular multi-sensor data in a sensor-data-lake, to efficiently provide probabilistic answers to support engineering analysis without repeatedly accessing the raw data; and demonstrate how potentially diverse and unrelated public and private data sources can nevertheless be approximately and efficiently joined to derive useful statistical insights via distributional queries implemented using Bayesian inference.

In an embodiment of the present disclosure, processing distributional queries on a database is described. Consider the scenario of data from multiple sensors, such as those now commonly present in most modern vehicles, aircraft and similar complex machinery, wherein all the raw data is present is a single table. As illustrated in Table 1: Each record of raw data pertaining to engine speed (ES), total fuel consumption (TF), net torque (NT) and control path (CP) is a tuple of real numbered sensor values.

Table 1: Vehicle sensor data

| Raw Data | | | | |
|---|---|---|---|---|
| t | ES | TF | NT | CP |
| 10 | 701 | 56.91 | 3.36 | 8 |
| 11 | 702.3 | 57.69 | 10.34 | 8 |
| 12 | 698.4 | 58.63 | 14.91 | 8 |
| 13 | 697 | 59.41 | 19.73 | 8 |
| .. | .. | .. | .. | .. |
| .. | .. | .. | .. | .. |
| 99 | 700.4 | 57.84 | 6.84 | 11 |
| D: Discretized Data | | | | |
| t | ES | TF | NT | CP |
| 10 | 7 | 6 | 1 | 8 |
| 11 | 7 | 7 | 5 | 8 |
| 12 | 6 | 8 | 5 | 8 |
| 13 | 6 | 9 | 7 | 8 |
| .. | .. | .. | .. | .. |
| .. | .. | .. | .. | .. |
| 99 | 7 | 7 | 2 | 11 |

In discretized form, i.e., as D in the Table 1, real values of each sensor are converted to bin numbers; for example, the ES sensor might be discretized using ten bins - 100 to 200, 200 to 300, etc. Engineering analysis of such data usually involves computing and visualizing the distribution of a particular sensor's values, i.e., how often each bin is populated in the data; and the joint distribution of two sensors, i.e., how often each pair of bin-values are populated, resulting in a two dimensional display. More importantly, it may be pertinent to determine the distribution of one or more target set of sensors given certain conditions on the remaining sensors, such as the distribution of TF (total fuel consumption) when ES (engine speed) is low but NT (net torque) is high.

In general, let the dataset be denoted as $D(a)$, where $a$ denotes $M$ attributes $a_1 \dots a_M$, corresponding to different sensors. Further, suppose each attribute $a_i$ takes $n_i$ discrete values, $b_{il} \dots b_{ini}$. The computation of a distribution for attribute $a_i$ can be expressed in relational algebra as computing $n_i$ queries on $D$ of the form:

$$G_{count\,()}\ \sigma_{[a_i\,=\,b_{ij}]}D \qquad\qquad (1)$$

for each $j = 1 \dots n_i$. Here, $G_{count()}$ refers to aggregate function count () under a select operation ($\sigma$) with condition $a_i = b_{ij}$.

More generally, for $k$ target attributes $a_{i_1} \dots a_{i_k}$, a $k$ dimensional distributional query under conditions $Q$, where $Q$ specifies a set of conditions on some or all of the remaining $n - k$ attributes can be computed by executing $n_{i_1}$ x $n_{i_2}$ x ... $n_{i_k}$ queries, each of the form:

$$G_{count\,()}\ \sigma_{[a_{i_1}\,=\,b_{i_1j_1},\,a_{i_2}\,=\,b_{i_2j_2},\,\dots\,a_{i_k}\,=\,b_{i_kj_k},\,Q]}D \qquad (2)$$

for each possible combination of $j_1 \dots j_k$, i.e., where every $j_l$ can take $n_l$ values $1 \dots n_l$.

For example the distribution of ES sensor under the conditions that TF lies in its bin 7 or 8, and CP lies in its bin 5, can be obtained by evaluating ten relational queries of form:

$$G_{count\,()}\ \sigma_{[ES\,=\,j,\,TF\in[7,8],\,CP\,=\,5]}D \qquad\qquad (3)$$

for the ten bins of ES, $j = 1 \dots 10$ here it is assumed that ES has been discretized into ten bins).

It may be noted that each set of distributional queries can be computed in a single pass over the entire database, or using an index of some form if the condition $Q$ is highly selective. When data volumes become very large, having to access the data for each query becomes a significant overhead, especially when queries are not highly selective, making indexes irrelevant and necessitating a scan through the entire data. Often even loading a dataset in to a traditional database is not worth the benefit of rapid querying using indexes.

In another embodiment of the present disclosure, joining multiple datasets is described. In case data comes from diverse sources, an additional complication arises of joining different sources based on common or related attributes. Consider an example of data of interest for a marketing professional: e.g., income from census data ($D_1$), location of a person over time from a mobile operator ($D_2$) and profession from a marketing survey ($D_3$), as shown is Table 2. It should be noted that datasets may have been collected by surveying or monitoring different sets of people, albeit in the same overall geography, i.e., the data represents the same underlying 'ground truth', and each sample is assumed to be equally unbiased.

Table 2: Disparate market datasets

| $D_1$ | | $D_2$ | | $D_3$ | |
|---|---|---|---|---|---|
| $R_1$ | Income | $R_2$ | Location | $R_3$ | Profession |
| 1 | 110089 | 2 | Restaurant | 1 | Lawyer |
| 2 | 116702 | 1 | School | 3 | Surgeon |
| 1 | 103868 | 2 | Hotel | 3 | Architect |
| 1 | 135433 | 2 | School | 2 | Farmer |
| - | - | - | - | - | - |
| - | - | - | - | - | - |
| 2 | 147453 | 1 | Shop | 2 | Architect |

According to the present scenario, three databases $D_1$, $D_2$, and $D_3$ representing the income, location and profession respectively of people in different regions are captured by the attributes $R_1$, $R_2$ and $R_3$. It should be noted that even if the same geographical segmentation is used for each of the region attributes, common region attribute cannot be used to meaningfully join the three tables, since each of the joins D = D1 ⋈ $_{R1=R2}$ D2, D2 ⋈ $_{R2=R3}$ D3, or D1 ⋈ $_{R1=R3}$ D3 are many-many relationships. So, while these joins are defined, they do not serve any meaningful purpose. Instead, a mechanism of querying a hypothetical joined dataset D is explored, such as depicted in Table 3 herein below, which might have been possible to compute if each of the tables had a common attribute that uniquely identifies an individual. Unfortunately, no such attribute is available.

In accordance with the present disclosure, it is still possible to derive meaningful insights from such disparate datasets, albeit under some strong assumptions. Suppose each of the datasets $D_i$ is viewed as random samples from the hypothetical distribution $D$. Unfortunately, each such sample is itself incomplete, with two out of three attributes missing, as shown in Table 3.

Table 3: Hypothetical Joined Dataset

| | $D$ | | |
| --- | --- | --- | --- |
| $R$ | Income | Location | Profession |
| 1 | 110089 | ? | ? |
| 2 | 116702 | ? | ? |
| 1 | 103868 | ? | ? |
| 1 | 135433 | ? | ? |
| - | - | - | - |
| - | - | - | - |
| 2 | ? | Restaurant | ? |
| 1 | ? | School | ? |
| 2 | ? | Hotel | ? |
| 2 | ? | School | ? |
| - | - | - | - |
| - | - | - | - |
| 1 | 110089 | ? | Lawyer |
| 3 | 116702 | ? | Surgeon |
| 3 | 103868 | ? | Architect |
| 2 | 135433 | ? | Farmer |
| - | - | - | - |
| - | - | - | - |

It should be noted that this is an extreme example of a missing-data problem, commonly encountered in machine-learning. Such situations are usually tackled by attempting to fill in the missing values as best as possible using other attributes present. So, for example, one might try to fill in the Location and Profession columns by computing those that maximize the conditional probability *P (Location, Profession Income, Region).* In general, missing attributes are filled with the combination that maximizes their joint probability conditioned on whatever attributes are observed:

$$arg\ max\ P(\forall_{a_i} \in M | \forall_{a_j} \in O) \qquad (4)$$

where *M* and *O* stand for missing and observed attributes respectively.

In practice, this may be difficult to compute without even further assumptions. Nevertheless, suppose it is assumed that all the attributes of interest are independent of each other, given those that are observed. In the example described above, this translates to Location, and Profession being independent of each other at least within each Income, Region combination. In other words, any correlation between the missing variables can be explained by those that are observed. This is the naive Bayes assumption commonly used in data fusion and machine learning, using which equation (4) becomes:

$$arg \; max \; \Pi_{\forall i \in M} \, P(a_i | \; \forall_{a_i} \in O \,) \; P(\forall_{a_i} \in O \,) \qquad (5)$$

In the above example, this leads to filling in missing values by maximizing the product of P(P|I,R), P(P|I,R) and P(I,R) instead of P(L,R|R,R), wherein *P, L, I and R* represent Profession, Location, Income and Region, respectively).

In an embodiment of the present disclosure, incongruous Join Keys is described. If each of the datasets $D_j$ are truly disparate, each dataset may use different geographical segmentations for their respective region attributes. So R1 = 1 and R2 = 1 may not in fact be the same region. Further, one dataset may have used regions coarser than the other, and regions from different datasets may overlap with each other in practice, e.g. zip codes and counties. In such a situation the above procedure for filling in missing values of D may not be necessarily apt. In an embodiment, the three datasets may be augmented with an additional dataset that helps derive a relationship between the different region attributes. Such a dataset could, for example, be derived from a map, where all the regions are marked out. Points are randomly sampled on such a map, noting for each point all three of its region values, i.e., according to *R1, R2 and R3.* The joined table *D* would now have additional rows where only these three region attributes are filled, and such rows would provide the link for estimating missing values. However, since the linkages are now indirect, and, as shown below, it is easier to address the problem using full probabilistic inference rather than via first filling in missing values followed by executing relational queries.

In general the problem scenario can be formulated as follows: Given datasets $D_j$s, it is assumed that datasets $D_j$s may have some level of overlap in terms of attributes $a_i$. For every *i* there exists $a_j$, such that $a_i \cap a_j \neq \emptyset$, as seen in the above example. Further, if this is not true i.e., there is no explicit overlap between two or more datasets, it is assumed that data can be augmented with additional datasets so that this is the case. It is also assumed that collection of datasets are fully connected. If a graph is defined having the $D_j$s as nodes and an edge between $D_i$ and $D_j$, if these share at least one common attribute, then the collections of datasets are connected if this graph is fully connected, i.e., comprises of one connected component. In case this is not true, once again it is assumed that one can augment the collection of datasets to make it true.

The present disclosure deals with processing of distributional queries on a connected collection of datasets, where the attributes of each dataset have been discretized. As in the example above, such a collection can be viewed as comprising of independent samples of a 'joined' dataset D, where a chain of common attributes connects the tables.

In an embodiment of the present disclosure, distributional queries as probabilistic inference is described. In accordance with the present disclosure, the joined dataset *D(a)* of Table 3 can be viewed as comprising of samples from a joint distribution *P(a)* across random variables corresponding to the attributes *a*. Distributional queries are then equivalent to probabilistic inference, i.e., the set of queries (1) can be viewed as computing the probability distribution $P(a_i)$ by marginalizing the joint distribution *P(a)*. Similarly, the general distributional query executed by the set (2) is computing the conditional posterior probability:

$$P \,(a_i, a_{i_2}, ...... a_{i_k} | Q) \qquad (6)$$

This can be computed from the joint distribution *P* by marginalization under the evidence *Q,* i.e., classical probabilistic inference:

$$P \,(a_i, a_{i_2}, ..... a_{i_k} | Q) \; \approx \; \sum_{a \backslash \{a_1, .... a_k\}, Q} P(a) \qquad (7)$$

$\approx$ since this needs to be normalized

Since the datasets are 'connected', and under appropriate assumptions of conditional independence, some obtained from domain knowledge, and others forced by the circumstances of what datasets $D_i$ are actually available, can factor the joint distribution in (6) using a single Bayesian network as

$$P(a) = \Pi_i \, P(a_i | Pa(a_i)) \qquad (8)$$

where $Pa(a_i)$ denotes the parents of variable $a_i$ in the Bayesian network. In accordance with the present disclosure, equations (6) and (8) above can be combined to efficiently compute distributional queries.

In another embodiment of the present disclosure querying for values using distributions is described. Once the problem of distributional queries is viewed from the perspective of inference on the joint probability distribution over attributes $a$, in accordance with the present disclosure, one can also answer value-based queries for continuous variables. This is required in many situations, for example instead of the two dimensional join distribution of NT and TF, one might want to see a distribution of NT vs TF, i.e., the actual values of NT for different TF values. This is the kind of query a traditional scatter-plot might convey, or a traditional 'business intelligence' query on the 'average NT for each bin of TF'. In the language of probability, such queries are easily expressed in terms of expected values, which can be computed using distributional queries: The average NT for each bin $b_{TFi}$ of TF can be expressed as $E[NT|TF = b_{TFi}]$, which is computable from the conditional distribution of NT given TF as follows:

$$\sum_j v(b_{NTj})\, P\,(NT = b_{NTj}|TF = b_{TF_i}) \qquad (9)$$

where $v(b_{NTj})$ is say, the midpoint of bin $b_{NTj}$ of NT; e.g. if $b_{NTj} \equiv NT_1 < NT < NT_2$, then $v(b_{NTj}) = (NT_1 + NT_2)/2$. Similarly, in the case of categorical variables, it is easily possible to compute the most likely location for a person of high income to visit by maximizing:

$$arg \, \max_{Location} P\,(Location\,|Income \in [100000,\,130000]) \qquad (10)$$

In accordance with the present disclosure, a distributional query on a collection of datasets essentially can be computed via conditional inference on the joint probability distribution of attributes $P(a)$. In case of diverse data sources as discussed in the marketing data example, the attribute set would have been suitably augmented with additional attributes, to ensure that the collection of datasets is connected. A Bayesian network (BN) is modeled approximating the joint distribution, with each node representing an attribute. In the case of diverse datasets, the structure of such a BN may be constrained by the limited conditional distributions computable using the available datasets $D_i$. If $D$ is available fully, a BN may be defined using domain knowledge along with constraints on its structure that make it easy to evaluate, e.g., ensuring it is close as possible to a tree, etc.

In an embodiment, for probabilistic inferencing on this BN, conditional queries are translated into a Structured Query Language (SQL). An SQL engine is employed for querying CPTs considering them as a set of relational tables. The present disclosure thus provides a method for fusion of probabilistic models using the SQL engine. Since the BN represents an approximation to the joint distribution structure, a suitable mechanism is required for measuring the BN accuracy. In accordance with an embodiment of the present disclosure, the Bayesian network is validated based on estimation error computed by comparing results of processing a set of distributional queries on the raw data and the Bayesian network.

Using SQL for conditional queries on a Bayesian network in accordance with an embodiment of the present disclosure is described hereinafter. The conditional probabilities learned from the raw data are stored in an SQL database and all further probabilistic queries are then answered using this database. For example, if the relational expression described in equation 3 is translated on the vehicle sensor dataset of Table 1 into probabilistic inference, it amounts to computing a set of conditional probability queries as:

$$P(ES = j,\,|TF \in [7,\,8],\,CP = 5]) \qquad (11)$$

which are then multiplied and marginalized according to equations (8) and (6) respectively.

In an embodiment, the product (8) and sum (6) can be computed using the SQL engine on the database of CPTs, for an exemplary Bayesian network for vehicle sensor data as illustrated in FIG.4, as follows:

```
SELECT ES, SUM (P_TF*P_NT*P_ES*P_CP)

FROMT_TF, T_NT, T_ES, T_CP
WHERE TF IN (7, 8) AND CP = 5
```

*GROUP BYES*

Here *ES* is a queried variable, and *T_TF, T_NT, T_ES, T_CP* are the CPTs for *TF, NT, ES, CP* based on the Bayesian network. *P_TF P_NT, P_ES* and *P_CP* are the respective probability column names, and the *WHERE* clause defines the given conditions. Using similar query, one can also compute the evidence of given conditions as shown below:

*SELECT SUM(P_TF\*P_NT\*P_ES\*P_CP)*

*FROMT_TF, T_NT, T_ES, T_CP*
*WHERE TF IN (7, 8) AND CP = 5*

where the notations are similar to the ones given above.

Validation of Bayesian network in accordance with an embodiment of the present disclosure is described hereinafter. As probabilistic inference are being used there is bound to be some difference between the queries when executed on the raw data and the queries executed using BN. In an embodiment, some validation queries are given as input in the configuration file for measuring the error bounds. The output of the validation queries obtained from the network and from the raw data are then compared. In an embodiment, the two derived distributions are compared using KL divergence (KLD) and Bhattacharyya coefficient (BC). Let the distribution obtained from raw data be Y and the distribution obtained from network be Z. Since Y and Z are both discrete distributions, the symmetric KL divergence between them as $D_{KL}(Y, Z) = D_{KL}(Y\|Z) + D_{KL}(Z\|Y)/2$, where $D_{KL}(Y\|Z) = \sum_i Y(i) \ln \frac{Y(i)}{Z(i)}$. Also, the Bhattacharyya coefficient between Y and Z is given by $BC(Y,Z) = \sum_i \sqrt{Y(i) * Z(i)}$.

EXPERIMENTAL ANALYSES

The method and system of the present disclosure of business data fusion are evaluated on two scenarios described as datasets of Table 1 and 2 herein above. The objective is to show that the method of the present disclosure can provide an efficient solution for distributional querying on multiple and diverse datasets. Since the method primarily depends on domain knowledge supplied Bayesian network, the focus of the experimental evaluation is on computation of validation errors in case of a set of sample querying describing different conditions. The related computation analyses described hereinafter have been obtained on an Intel™ Core i5 workstation with 3.2 GHZ speed and 4GB RAM.

Processing distributional queries on vehicle sensor data is described hereinafter. As machines such as vehicles, engines or any other equipment become more and more complex they are increasingly being fitted with multiple, often hundreds of sensors. Analyzing the voluminous data produced by population of vehicles so outfitted allows manufactures to better understand the behavior of their products in the field as well as exactly how their customers use them; information that is invaluable in determining reasons for abnormal behavior leading to faults, finding opportunities for improving design, etc.

A large collection of sensor data is used for multiple instances of an engine. The engines had more than two hundred sensors and for each sensor, readings were taken for an average half-hour run of the engine. The data consisted of such runs for over a year and was stored in csv format. It had more than twelve million records and was 15 GB size. This data was first converted to binary form in order to speed up the process of reading raw data. This led to the raw data being compressed to 10GB. The binary files were then used as input data for learning the parameters of the Bayesian network, and querying on the raw data.

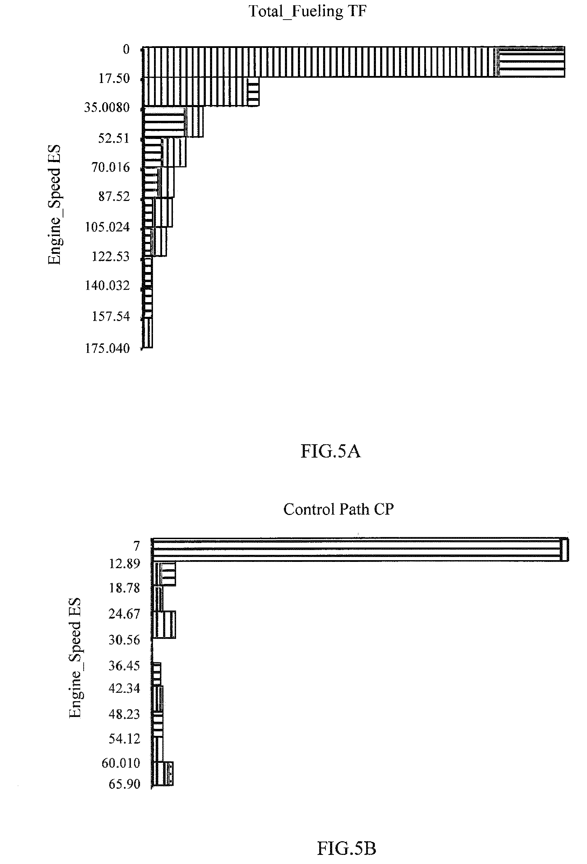

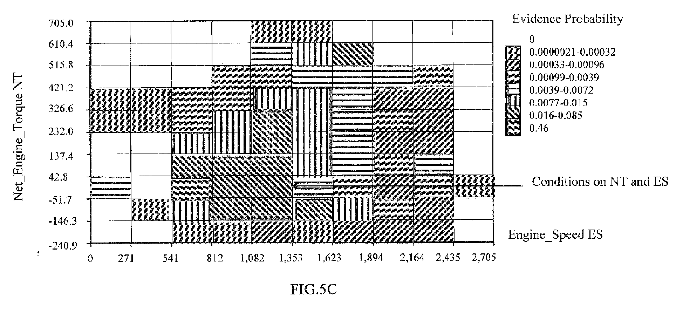

The business data fusion was analyzed for a use-case with real-life sensor data, with four sensors being engine speed (ES), net torque (NT), total fueling (TF) and combustion control path owner or control path (CP). As the method of the present disclosure requires discretized sensor values, these values are represented as set of 1 and 2-D histograms computed as a process of statistical profiling of the data. FIG.5A, FIG. 5B and FIG.5C are exemplary illustrations of the distribution of discretized ES versus TF, CP and NT respectively as histograms on a visual analytics workbench. The various hatching patterns represent initial values and updated values after querying. The initial values are shown by horizontal hatching, while updated values based on the range selection has been illustrated here by vertical hatching. These histograms depict normalized values ranging between zero and one. An instance of distributional query can be described by range selection on selected sensors, wherein the initial and post-query distribution on remaining sensors are shown. The probability of the evidence, i.e., the selections, as a vertical bar, indicating the support of the selected conditions in terms of probability is also shown.

For validation, a number of validation queries containing one to four sensors were formulated. The validation queries were then executed on the raw data and on the BN. An average time of 10 ~ 12 seconds was observed without considering the data reading time in memory (which was 4 minutes in the environment under consideration). The same queries when executed on the BN took less than 1 second as the query was being executed on the tables stored in SQL database. However, for learning the parameters of the BN, a linear scan of the entire raw data took approx. 4 minutes. The errors between distribution computed by the raw data and using BN for sample queries have been shown in the Table 4.

Table 4: Validation queries for multi-sensor analysis

| Condition | Query | Evidence from raw data | Evidence from network | KLD | BC |
|---|---|---|---|---|---|
| ES=[1,2,4:8] & NT=[2:4,6,7] | TF | 0.009 | 0.240 | 0.000 | 0.999 |
| TF=[0,1,5:7] | ES&NT | 0.735 | 0.932 | 0.692 | 0.856 |
| TF=[0:8] | CP | 0.994 | 0.998 | 0.005 | 0.999 |
| CP=[0:3,6:8] | TF | 0.982 | 0.982 | 0.276 | 0.933 |

The distribution errors for queries with high evidence are close to zero. Nevertheless, the first and last row in Table 4 show contrasting results, where the first query have less support in the data, but BN based querying is almost accurate as raw data. Further, for the last row, even with high support query, distribution errors are high potentially suggesting other dependencies missing in the encoded BN structure. Nevertheless, the direction of change between the distribution prior to and after executing the Bayesian query remains accurate, and in most situations this is what matters the most to engineers.

Querying on disparate data sources, particularly marketing data is described hereinafter. While conducting market intelligence one often has access to data capturing different attributes of people from several regions typically compiled by different agencies. The situation is similar to the scenario introduced by Table 2 above. Since each agency collects data in a different manner, i.e., each agency collects data from different regions, each potentially delimited differently, combining such data sources becomes an obstacle to deriving any meaningful analysis from such data. One way can be, by consolidating the data from the different sub regions by ignoring sub regions, i.e., using each data source only as a description of the union of all its regions. However, while this will lead to a larger and reliable dataset, it would be at the expense of ignoring insights based on region specific correlations. Instead, in order to determine correlations between the regions one can mark all regions on a common map. The conditional probability distribution can be found for each of these regions given other regions based on the geographical overlap between each pair of regions.

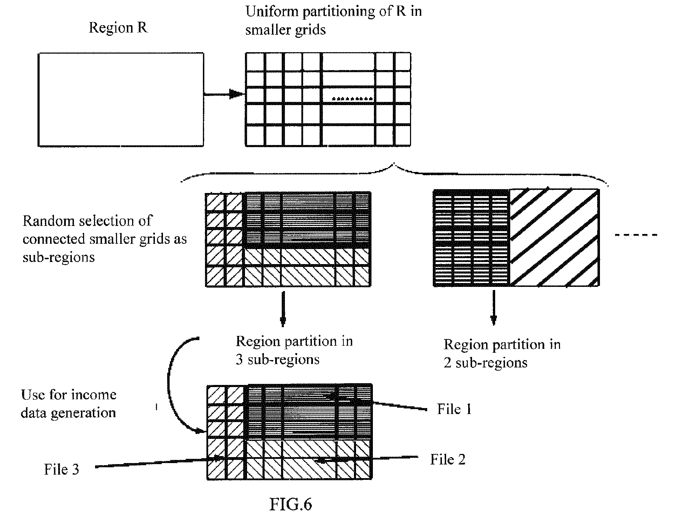

Data generation is described hereinafter. For this experiment a synthetic dataset was generated with 20 million records having four attributes of a person viz., income, profession, location and expenditure, with region being an additional attribute augmenting the attribute set. Assumed is a rectangular grid on the overall geography of interest. A segmentation of this geography into regions can be defined as illustrated in FIG.6. Four different segmentations of the overall region (geography) were generated into two or three regions, i.e., the $R_i$s in Table 2 can each have different cardinality.

Attribute values for income (I), profession (P), location (L) and expenditure (E) were generated for each grid cell using different means and variances, corresponding to people with different incomes, professions, location they frequent the most, and what they spend on. Separate files were created for each dataset by randomly sampling a large number of records from base generated data, including only one of the four attributes per dataset, and tagging each record with the region corresponding to the segmentation specific for that dataset. The region segmentation for each dataset was represented by a new variable such as R_I for income distribution, which would take one of three values for a sample. Similarly, for location, variable R_L takes only two possible values.

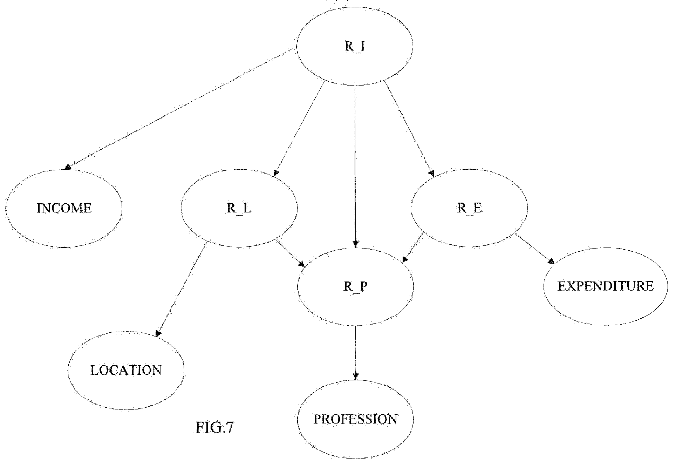

Probabilistic inference is described hereinafter. Following the data generation process, the Bayesian network for this case is modeled as shown in FIG.7. The segmentation of the overall geography into grid cells is assumed to be the 'map' using which the overlap between two region segmentation scheme is computed i.e., P(R_I|R_L), which is used for computing the CPTs in the Bayesian network. Distributional queries were computed using SQL as described earlier.

Errors for sample validation queries are shown in Table 5.

Table 5: Validation queries for marketing data

| Condition | Query | Evidence from raw data | Evidence from network | KLD | BC |
|---|---|---|---|---|---|
| Income=[1:4] & Profession = [0,3:5] | Expenditure | 0.428 | 0.450 | 0.090 | 0.978 |

(continued)

| Condition | Query | Evidence from raw data | Evidence from network | KLD | BC |
|---|---|---|---|---|---|
| Expenditure = [0:2] | Profession & Income | 0.727 | 0.727 | 0.444 | 0.901 |
| Profession = [6:8] | Location | 0.0465 | 0.0465 | 0.281 | 0.946 |
| Location = [3,4] | Income | 0.346 | 0.346 | 0.198 | 0.955 |

As seen, the BC distance between conditional distributions computed by the network and the raw data have a high overlap. Once again though, the direction of the changes in each distribution before and after executing a query are the same whether one uses the raw data or probabilistic method for joining its disparate samples. Note that in practice, since the original joined data samples are assumed to be unavailable, such validations would be impossible to compute these errors; such validation can be done in this analyses since synthetic data was being used.

With regard to the execution performance, querying each of the datasets involves loading the entire dataset into the memory while scanning each file. This takes on an average hundred seconds on the synthetic data while the time taken to query using the BN is less than a second. The time taken for querying on the BN using SQL is excluding the time taken to learn the CPTs which also takes approximately hundred seconds, which is again mostly being spent on input-output. The execution of distributional queries were demonstrated on disparate datasets. Further, by compressing the data distributions and their correlations into a Bayesian network, query execution time is significantly improved, in much the same manner as materialized views do for standard database queries.

The present disclosure has defined the problem of 'distributional' queries on one or more datasets, potentially arising from diverse sources, motivated by real-life as well as potential application scenarios The problem can be viewed as being equivalent to conditional probabilistic inference on a single dataset, or on a hypothetical 'joined' dataset in the case of multiple datasets from potentially diverse sources. It is seen that in accordance with the present disclosure, many value-based queries, such as are often encountered in business intelligence, can also be approximately answered based on distributional queries. The present disclosure provides a 'business data fusion' method to compute distributional queries by approximating the underlying joint distribution via a Bayesian network, defined using domain knowledge as well as constraints arising from available datasets. The system of the present disclosure provides business data fusion that evaluates distributional queries for performing probabilistic inference using SQL queries on a database of the conditional probability tables of the Bayesian network. In particular, the system of the present disclosure does not need to re-access the raw data once the network parameters have been learned. Experimental results were reported on a real-life sensor dataset as well as a synthetic collection of datasets illustrating a hypothetical scenario of marketing analysis, including execution performance as well as accuracy as compared to exact computation using the raw data.

Systems and methods of the present disclosure is well suited for approximately integrating data in a 'data lake' architecture, wherein data stored in near-raw form in a distributed file system is directly processed for insights as opposed to first integrating it into a data warehouse. Again, in accordance with the present disclosure, seemingly disparate datasets that would have been difficult or impossible to join using traditional database techniques, can nevertheless be processed to derive meaningful insights via distributional queries executed via business data fusion. The method of the present disclosure is potentially also usable for data mining in addition to query processing. Since it provides at least one answer to distributional queries via conditional inference on a Bayesian network, it is possible to determine the support and confidence of any particular combination of values, each of which can be expressed as distributional queries/conditional inference. Thereafter association rules, subgroups are computable using data mining techniques to efficiently search the space of combinations of attribute values.

The written description describes the subject matter herein to enable any person skilled in the art to make and use the embodiments of the present disclosure. The scope of the subject matter embodiments defined here may include other modifications that occur to those skilled in the art. Such other modifications are intended to be within the scope if they have similar elements that do not differ from the literal language of the claims or if they include equivalent elements with insubstantial differences from the literal language.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments of the present disclosure may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules comprising the system of the present disclosure and described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The various modules described herein may be implemented as software and/or hardware modules and may be stored in any type of non-transitory computer readable medium or other storage device. Some nonlimiting examples of non-transitory computer-readable media include CDs, DVDs, BLU-RAY, flash memory, and hard disk drives.

Further, although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

It is intended that the disclosure and examples be considered as exemplary only, with a true scope and spirit of disclosed embodiments being indicated by the following claims.

**Claims**

1. A processor implemented method comprising:

   defining, using one or more hardware processors, a Bayesian network based on one or more attributes associated with raw data spanning a plurality of disparate sources (202), wherein each of the one or more attributes form a random variable in the Bayesian network;
   pre-processing, using the one or more hardware processors, the raw data based on the Bayesian network to compute conditional probabilities therein as parameters (204);
   joining, using the one or more hardware processors, the one or more attributes in the raw data using the conditional probabilities (206); and
   executing, using the one or more hardware processors, probabilistic inference from a database of the conditional probabilities (208).

2. The method of claim 1, wherein defining the Bayesian network is based on at least one of (a) domain understanding of dependencies and correlations and (b) structure learning methods.

3. The method of claim 1, wherein the one or more attributes that are directly mapped to each other are assigned to a random variable and the one or more attributes that are only related approximately are maintained as separate random variables.

4. The method of claim 1, wherein pre-processing the raw data comprises compressing the raw data to generate conditional probability tables.

5. The method of claim 4, wherein executing probabilistic inference comprises employing a Structured Query Language (SQL) engine.

6. The method of claim 5 further comprising processing a distributional query on the Bayesian network based on the conditional probabilities to retrieve at least one result.

7. The method of claim 1 further comprising validating the Bayesian network based on estimation error computed by comparing results of processing a set of validation queries on the raw data and the Bayesian network.

8. A system (100) comprising:

   one or more data storage devices (102) operatively coupled to one or more hardware processors (104) and configured to store instructions configured for execution by the one or more hardware processors to:

   define a Bayesian network based on one or more attributes associated with raw data spanning a plurality of disparate sources, wherein each of the one or more attributes form a random variable in the Bayesian network;
   pre-process the raw data based on the Bayesian network to compute conditional probabilities therein as parameters;
   join the one or more attributes in the raw data using the conditional probabilities; and
   execute probabilistic inference from a database of the probabilities.

9. The system of claim 8, wherein the one or more hardware processors are further configured to define the Bayesian network based on at least one of (a) domain understanding of dependencies and correlations and (b) structure learning methods.

10. The system of claim 8, wherein the one or more attributes that can be directly mapped to each other are assigned to a random variable and the one or more attributes that can be only be related approximately are maintained as separate random variables.

11. The system of claim 8, wherein the one or more hardware processors are further configured to pre-process the raw data by compressing the raw data to generate conditional probability tables.

12. The system of claim 11, wherein the one or more hardware processors are further configured to execute probabilistic inference by employing a Structured Query Language (SQL) engine.

13. The system of claim 12, wherein the one or more hardware processors are further configured to process a distributional query on the Bayesian network based on the conditional probabilities to retrieve at least one result.

14. The system of claim 8, wherein the one or more hardware processors are further configured to validate the Bayesian network based on estimation error computed by comparing results of processing a set of validation queries on the raw data and the Bayesian network.

15. A computer program product comprising a non-transitory computer readable medium having a computer readable program embodied therein, wherein the computer readable program, when executed on a computing device, causes the computing device to:

   define a Bayesian network based on one or more attributes associated with raw data spanning a plurality of disparate sources;
   pre-process the raw data based on the Bayesian network to compute conditional probabilities therein as parameters;
   join the one or more attributes in the raw data using the conditional probabilities; and
   execute probabilistic inference from a database of the probabilities.

SYSTEM **100**

MEMORY **102**

HARDWARE PROCESSOR(S) **104**

I/O INTERFACE(S) **106**

FIG.1

200

202
defining a Bayesian network based on one or more attributes associated with raw data spanning a plurality of disparate sources

204
pre-processing the raw data based on the Bayesian network to compute conditional probabilities therein as parameters

206
joining the one or more attributes in the raw data using the conditional probabilities

208
executing probabilistic inference from a database of the conditional probabilities

FIG.2

FIG.3

FIG.4

Total_Fueling TF

FIG.5A

Control Path CP

FIG.5B

FIG.5C

Region R

Uniform partitioning of R in smaller grids

Random selection of connected smaller grids as sub-regions

Region partition in 3 sub-regions

Region partition in 2 sub-regions

Use for income data generation

File 1

File 3

File 2

FIG.6

FIG.7

Europäisches
Patentamt
European
Patent Office
Office européen
des brevets

# EUROPEAN SEARCH REPORT

Application Number

EP 16 17 6303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Dimitris Margaritis: "Learning Bayesian Network Model Structure from Data", Thesis - School of Computer Science, Carnegie Mellon University, May 2003 (2003-05), pages 1-126, XP055323218, Retrieved from the Internet: URL:https://www.cs.cmu.edu/~dmarg/Papers/PhD-Thesis-Margaritis.pdf [retrieved on 2016-11-25] * page 2, paragraph 2 - page 6, paragraph 4 * * page 13, last paragraph - page 16, paragraph 1 * * page 25, paragraph 1 * * page 71, paragraph 1 - page 77, paragraph 1 * * page 80, paragraph 6 - paragraph 7 * * page 87, paragraph 2 * ----- -/-- | 1-15 | INV. G06F17/30 G06N7/00 |

TECHNICAL FIELDS
SEARCHED      (IPC)

G06F
G06N

The present search report has been drawn up for all claims

| Place of search | Date of completion of the search | Examiner |
|---|---|---|
| The Hague | 25 November 2016 | Fournier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 17 6303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Martin Theobald ET AL: "Extraction of Conditional Probabilities of the Relationships Between Drugs, Diseases, and Genes from PubMed Guided by Relationships in PharmGKB", Summit on translational bioinformatics, March 15 - 17, 2009, San Francisco, CA, March 2009 (2009-03), pages 124-128, XP055323213, Retrieved from the Internet: URL:http://citeseerx.ist.psu.edu/viewdoc/download;jsessionid=F1BEE048C4ACF11E7A0B93A3C3C62257?doi=10.1.1.293.5794&rep=rep1&type=pdf [retrieved on 2016-11-25] * page 125, left-hand column, paragraph 2 - page 126, left-hand column, paragraph 1 * * page 126, right-hand column, paragraph 1 * * page 127, left-hand column, paragraph 1 - paragraph 4 * | 1-15 | |
| A | WO 2004/036461 A2 (BATTELLE MEMORIAL INSTITUTE [US]; BURGOON DAVID A [US]; DAVIS MARK D []) 29 April 2004 (2004-04-29) * abstract * * page 8 - page 16 * * page 98, line 14 - page 101, line 15 * | 1,8,15 | TECHNICAL FIELDS SEARCHED (IPC) |

The present search report has been drawn up for all claims

| Place of search | Date of completion of the search | Examiner |
|---|---|---|
| The Hague | 25 November 2016 | Fournier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 6303

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2016

| Patent document cited in search report | Publication date | Patent family member(s) | Publication date |
|---|---|---|---|
| WO 2004036461 A2 | 29-04-2004 | AU 2003284118 A1<br>US 2004111410 A1<br>WO 2004036461 A2 | 04-05-2004<br>10-06-2004<br>29-04-2004 |

EPO FORM P0459

For more details about this annex : see Official Journal of the European Patent Office, No. 12/82

**REFERENCES CITED IN THE DESCRIPTION**

**Patent documents cited in the description**

- IN 2568MUM2015